(19) Europäisches Patentamt
European Patent Office
Office européen des brevets

(11) EP 3 950 769 A1

(12) EUROPEAN PATENT APPLICATION
published in accordance with Art. 153(4) EPC

(43) Date of publication:
**09.02.2022 Bulletin 2022/06**

(21) Application number: **20782454.1**

(22) Date of filing: **27.03.2020**

(51) International Patent Classification (IPC):
***C08G 64/02*** *(2006.01)* ***C08G 64/42*** *(2006.01)*
***C08L 69/00*** *(2006.01)* ***H01M 4/62*** *(2006.01)*
***H01M 10/0562*** *(2010.01)*

(52) Cooperative Patent Classification (CPC):
**C08G 64/02; C08G 64/42; C08L 69/00; H01M 4/62; H01M 10/0562;** Y02E 60/10

(86) International application number:
**PCT/JP2020/014309**

(87) International publication number:
**WO 2020/203881 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019069157**
**31.10.2019 JP 2019199160**

(71) Applicant: **Teijin Limited**
**Osaka 530-0005 (JP)**

(72) Inventors:
- **ISHII, Shuto**
  **Osaka-shi, Osaka 530-0005 (JP)**
- **TOGASAKI, Junichi**
  **Osaka-shi, Osaka 530-0005 (JP)**
- **YACHI, Kazuki**
  **Osaka-shi, Osaka 530-0005 (JP)**
- **YAMAMOTO, Tomoyoshi**
  **Osaka-shi, Osaka 530-0005 (JP)**
- **DAIDO, Takahiro**
  **Osaka-shi, Osaka 530-0005 (JP)**

(74) Representative: **Carpmaels & Ransford LLP**
**One Southampton Row**
**London WC1B 5HA (GB)**

# (54) POLYMERIC BINDER AND ALL-SOLID-STATE SECONDARY BATTERY INCLUDING SAME

(57) A polymeric binder includes copolymerized aliphatic polycarbonate having structural units expressed by Formula (1) and Formula (2).

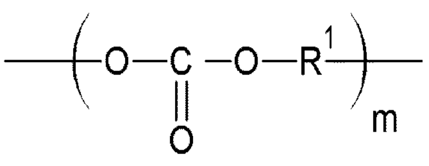

(1)

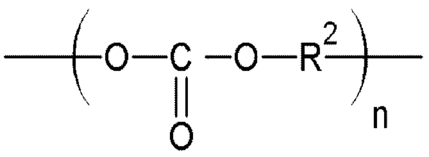

(2)

In Formula (1) and Formula (2), $R^1$ and $R^2$ independently denote alkylene groups having 2 to 20 carbon atoms and being nonidentical to each other, and m and n independently denote integers equal to or greater than 3 and equal to or less than 60.

EP 3 950 769 A1

## Description

Technical Field

The present disclosure relates to a polymeric binder and an all-solid-state secondary battery containing the same.

Background Art

Lithium ion secondary batteries have high discharge capacity and therefore are frequently used as power sources for a mobile phone, a digital camera, a video camera, a notebook PC, an electric vehicle, and the like.
A generally available lithium ion secondary battery uses a liquid electrolyte acquired by dissolving an electrolyte in a nonaqueous solvent. The nonaqueous solvent contains a large amount of combustible solvent.
Then, in order to enhance safety, an all-solid-state secondary battery in which a cathode mixture, an anode mixture, an electrolyte, and the like being components of the battery are formed of solid materials without using a liquid electrolyte have been proposed (Patent Literature 1 and Patent Literature 2).
Patent Literature 1 discloses a method for manufacturing a cathode, an anode, and a solid electrolyte layer by binding a solid material together by using binder resin such as polyvinylpyrrolidone or butylene rubber.
Further, Patent Literature 2 discloses use of polyvinyl acetal resin as a binder.

Citation List

Patent Literature

Patent Literature 1: Unexamined Japanese Patent Application Publication No. 2014-137869
Patent Literature 2: Unexamined Japanese Patent Application Publication No. 2014-212022

Summary of Invention

Technical Problem

An all-solid-state secondary battery is generally constituted of electrode mixture layers (a cathode layer and an anode layer) and a solid electrolyte layer placed between the electrode mixture layers. Polyelectrolytes and inorganic solid electrolytes such as metallic oxide and metallic sulfide are known as the solid electrolytes.
When metallic oxide is utilized as an inorganic solid electrolyte, a method of acquiring an all-solid-state secondary battery by forming a solid electrolyte layer by sintering particulate metallic oxide, laminating, on both sides of the solid electrolyte layer, a cathode layer and an anode layer that are similarly acquired, and then further performing sintering is known. On the other hand, when a sulfide-based compound such as metallic sulfide is utilized as the inorganic solid electrolyte, a method of acquiring an all-solid-state secondary battery by drying a substrate after applying solvent slurry containing a particulate sulfide-based compound on the substrate, forming a solid electrolyte layer by peeling off the substrate, laminating, on both sides the solid electrolyte layer, a cathode layer and an anode layer that are similarly acquired, and then pressurizing (pressing) the laminate is known. At this time, for the purpose of maintaining the shape of the all-solid-state secondary battery, a binder binding fine particles together is used.
Further improvement in battery performance (increased capacity in particular) toward widespread practical application of all-solid-state secondary batteries has been sought. Increasing an area of a battery (electrode) is effective for aiming at increased capacity of an all-solid-state secondary battery. However, there is a problem that since a cathode mixture, an anode mixture, and a solid electrolyte constituting an all-solid-state battery are mainly inorganic substances and therefore are likely to become fragile, it is difficult to achieve an increased area. Further, there is a problem that a conventional binder is an insulator from an ionic conduction viewpoint and therefore is not preferable for ionic conduction and that an acquired all-solid-state secondary battery does not reach target discharge capacity. Then, a binder evenly and firmly binding together a cathode mixture, an anode mixture, and a solid electrolyte and having ionic conductivity is required. Specifically, a binding property of active materials, inorganic particles, and the like existing in a cathode mixture, an anode mixture, and a solid electrolyte, a high binding property to a current collector, and metal ion conductivity are required.
An objective of the present disclosure is to provide a binder for an all-solid-state secondary battery that may have an increased area, the binder having excellent formability and ionic conductivity, and an all-solid-state secondary

battery containing the binder.

Solution to Problem

As a result of making an examination for solving the aforementioned problems, the present inventors have arrived at the present disclosure by finding that the aforementioned problem can be solved by using specific copolymerized aliphatic polycarbonate as a binder.

A polymeric binder according to a first aspect of the present disclosure includes copolymerized aliphatic polycarbonate having structural units expressed by Formula (1) and Formula (2) below.

[Chem. 1]

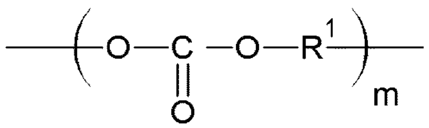

(1)

[Chem. 2]

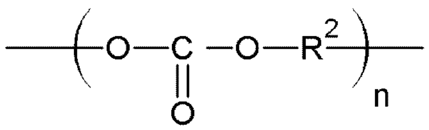

(2)

In Formula (1) and Formula (2), $R^1$ and $R^2$ independently denote alkylene groups having 2 to 20 carbon atoms and being nonidentical to each other, and m and n independently denote integers equal to or greater than 3 and equal to or less than 60.

It is preferable that the $R^1$ be an alkylene group having 2 to 7 carbon atoms and the $R^2$ be an alkylene group having 8 to 12 carbon atoms.

A molar ratio (m:n) of a structural unit expressed by the Formula (1) to a structural unit expressed by the Formula (2) is preferably (6:4) to (9.9:0.1).

The copolymerized aliphatic polycarbonate may be non-cross-linked copolymerized aliphatic polycarbonate or three-dimensional cross-linked copolymerized aliphatic polycarbonate.

The three-dimensional cross-linked copolymerized aliphatic polycarbonate preferably contains a component derived from polyol having three or more hydroxyl groups.

The polyol is preferably glycerin, trimethylolpropane, or pentaerythritol.

A ratio of a total of the Formula (1) and the Formula (2) to a component derived from polyol having three or more hydroxyl groups in the three-dimensional cross-linked copolymerized aliphatic polycarbonate is preferably (99.99:0.01) to (90:10) in terms of a molar ratio.

The copolymerized aliphatic polycarbonate preferably further has a structural unit expressed by Formula (3) below.

[Chem. 3]

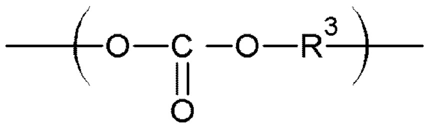

(3)

In Formula (3), $R^3$ denotes a hydrocarbon residue having a spiro-structure or a diphenylmethane structure, and the structure may contain a heteroatom.

The copolymerized aliphatic polycarbonate preferably further has a structural unit expressed by Formula (4) below.

[Chem. 4]

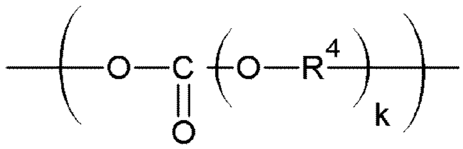

(4)

In Formula (4), $R^4$ denotes an aliphatic hydrocarbon residue having 2 to 10 carbon atoms, and k denotes an integer equal to or greater than 1 and equal to or less than 30.
An all-solid-state secondary battery according to a second aspect of the present disclosure includes the polymeric binder.

Advantageous Effects of Invention

The binder according to the present disclosure firmly binds an inorganic solid electrolyte together, has excellent formability due to an excellent binding property to aluminum, and has excellent ionic conductivity; and therefore a binder suitable for an all-solid-state secondary battery that may have an increased area can be provided. For example, the binder according to the present disclosure is useful as a polymeric binder for forming a cathode mixture layer, an anode mixture layer, and an inorganic solid electrolyte layer in an all-solid-state battery. Furthermore, the binder according to the present disclosure has excellent dispersibility in a hydrophobic solvent and therefore is useful as a polymeric binder for forming a solid electrolyte layer containing a sulfide-based compound.

Brief Description of Drawings

FIG. 1 is a $^1$H-NMR spectrum of three-dimensional cross-linked copolymerized aliphatic polycarbonate used in Example 1 of the present disclosure;
FIG. 2 is a $^1$H-NMR spectrum of non-cross-linked copolymerized aliphatic polycarbonate used in Example 2 of the present disclosure;
FIG. 3 is an Arrhenius plot of ionic conductance produced based on results of Examples;
FIG. 4 is a schematic diagram illustrating a case that the three-dimensional cross-linked copolymerized aliphatic polycarbonate molecule according to the present disclosure and a metal ion are dispersed in a hydrophobic solvent; and
FIG. 5 is a schematic diagram illustrating a case that a non-cross-linked copolymerized aliphatic polycarbonate molecule and a metal ion are dispersed in a hydrophobic solvent.

Description of Embodiments

A polymeric binder according to the present disclosure is used not only for enabling formation of a cathode, a solid electrolyte layer, or an anode constituting an all-solid-state secondary battery in a sheet shape but also for suppressing decline in ionic conduction between solid electrolytes.
First, the polymeric binder according to the present disclosure contains copolymerized aliphatic polycarbonate having structural units expressed by Formula (1) and Formula (2) below.

[Chem. 5]

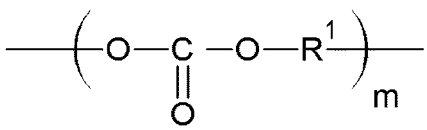

(1)

[Chem. 6]

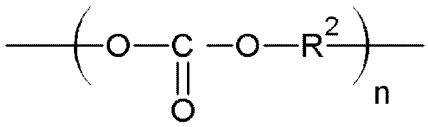

(2)

In Formula (1) and Formula (2), $R^1$ and $R^2$ independently denote alkylene groups having 2 to 20 carbon atoms and being nonidentical to each other. When the number of carbon atoms is less than 2, dispersibility in slurry used during production of the all-solid-state secondary battery tends to decline. As will be described later, the polymeric binder according to the present disclosure desirably permeates among a cathode mixture, an anode mixture, and a solid electrolyte in a manufacturing process of the all-solid-state secondary battery. Since slurry using a hydrophobic solvent is normally used in the manufacturing process, copolymerized aliphatic polycarbonate contained in the polymeric binder according to the present disclosure desirably disperses in a hydrophobic solvent. On the other hand, when the number of carbon atoms exceeds 20, affinity for a lithium ion tends to decline.

$R^1$ is preferably an alkylene group having 2 to 7 carbon atoms, and $R^2$ is preferably an alkylene group having 8 to 12 carbon atoms. $R^1$ and $R^2$ being thus different provide an excellent balance among a binding property, formability, and ionic conductivity.

Further, the alkylene group may be any of linear, branched, and cyclic, and may be substituted by an alkoxy group, a cyano group, one of primary to tertiary amino groups, a halogen atom, or the like in the main chain or a side chain. Further, each of $R^1$ and $R^2$ is not limited to one type but may include two types or more.

Examples of the alkylene group having 2 to 20 carbon atoms include chain aliphatic hydrocarbon groups such as an ethane-1,2-diyl group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, a decane-1,10-diyl group, a dodecane-1,12-diyl group, a tetradecane-1,14-diyl group, a hexadecane-1,16-diyl group, an octadecane-1,18-diyl group, and an icosane-1,20-diyl group, branched aliphatic hydrocarbon groups such as a 1-methylethane-1,2-diyl group, a 2-methylpropane-1,3-diyl group, a 2-methylbutane-1,4-diyl group, a 2-ethylbutane-1,4-diyl group, a 3-methylpentane-1,5-diyl group, a 3-methylpentane-1,5-diyl group, a 2-methylhexane-1,6-diyl group, and a 5-methyldecane-1,10-diyl group, and alicyclic hydrocarbon groups such as a cyclopropane-1,2-diyl group, a cyclobutane-1,2-diyl group, a cyclobutane-1,3-diyl group, a cyclopentane-1,2-diyl group, a cyclopentane-1,3-diyl group, a cyclohexane-1,1-diyl group, a cyclohexane-1,2-diyl group, a cyclohexane-1,3-diyl group, a cyclohexane-1,4-diyl group, a cycloheptane-1,2-diyl group, a cycloheptane-1,3-diyl group, a cycloheptane-1,4-diyl group, a cyclooctane-1,2-diyl group, a cyclooctane-1,3-diyl group, a cyclooctane-1,4-diyl group, a cyclooctane-1,5-diyl group, a cyclononane-1,2-diyl group, a cyclononane-1,3-diyl group, a cyclononane-1,4-diyl group, a cyclononane-1,5-diyl group, a cyclodecane-1,2-diyl group, a cyclodecane-1,3-diyl group, a cyclodecane-1,4-diyl group, a cyclodecane-1,5-diyl group, and a cyclodecane-1,6-diyl group.

In Formula (1) and Formula (2), m and n independently denote integers equal to or greater than 3 and equal to or less than 60. When m is less than 3, dispersibility of a solid electrolyte, a cathode active material, an anode active material, and the like in slurry declines. Further, when m exceeds 60, viscosity increases during preparation of slurry, and coatability of the slurry declines.

Note that m and n are preferably and independently 10 or greater and 40 or less and are particularly preferably 20 or greater and 25 or less.

In order to enable the cathode, the solid electrolyte layer, or the anode constituting the all-solid-state secondary battery to be formed in a sheet shape, the polymeric binder according to the present disclosure desirably have an excellent binding property to an electrode mixture or an inorganic solid electrolyte and have excellent strength. There is a tendency that when the ratio of the structural unit expressed by Formula (1) is high, the binding property improves but the strength declines and that when the ratio of the structural unit expressed by Formula (2) is high, the strength improves but the binding property declines. Accordingly, the content ratio between Formula (1) and Formula (2) being components is important for acquiring a target polymeric binder.

An arrangement of structural units of copolymerized aliphatic polycarbonate used in the present disclosure is not particularly limited and, for example, the copolymerized aliphatic polycarbonate may be a random copolymer, an alternating copolymer, a block copolymer, or a graft copolymer.

In the aforementioned copolymerized aliphatic polycarbonate, the molar ratio (m:n) of the repeating unit (structural unit) expressed in Formula (1) to the repeating unit (structural unit) expressed in Formula (2) is preferably (6:4) to (9.9:0.1), is more preferably (7:3) to (9.5:0.5), and is further preferably (8:2) to (9:1).

The weight-average molecular weight (Mw) of the aforementioned copolymerized aliphatic polycarbonate is preferably in a range from 5,000 to 200,000.

A method for manufacturing copolymerized aliphatic polycarbonate used in the polymeric binder according to

the present disclosure is not particularly limited; and, for example, a block copolymer can be acquired by previously synthesizing the polycarbonate in Formula (1) and the polycarbonate in Formula (2) by a generally known manufacturing method such as a method of performing carbonation by causing a diol compound in which a hydroxyl group is bonded to the end of an aliphatic hydrocarbon residue denoted by $R^1$ or $R^2$ to react with diphenyl carbonate or phosgene, mixing both types of polycarbonate, and using the aforementioned diphenyl carbonate or phosgene.

Further, a random copolymer can be acquired by performing carbonation by causing a diol compound in which a hydroxyl group is bonded to the end of the alkylene group denoted by $R^1$ and a diol compound in which a hydroxyl group is bonded to the end of the alkylene group denoted by $R^2$ to react with diphenyl carbonate, phosgene, or the like.

The aforementioned aliphatic polycarbonate preferably contains a block component in which the sum of m and n in Formula (1) and Formula (2) is an integer equal to or greater than 3 and equal to or less than 60. The content ratio of the structural units expressed by Formula (1) and Formula (2) in the aliphatic polycarbonate is 50% by mole or greater and 100% by mole or less, is preferably 75% by mole or greater and 100% by mole or less, and is more preferably 90% by mole or greater and 100% by mole or less. In other words, a polycarbonate structure other than repeating units in parentheses in the structures expressed by Formula (1) and Formula (2) may be contained at 50% by mole or less (in monomer units) of the entire aliphatic polycarbonate, preferably at 25% by mole or less, and more preferably at 10% by mole or less.

Second, the polymeric binder according to the present disclosure preferably has structures expressed by Formula (1), Formula (2), and Formula (3) below.

[Chem. 7]

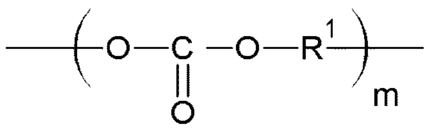
(1)

$R^1$ and m in Formula (1) are as described above.

[Chem. 8]

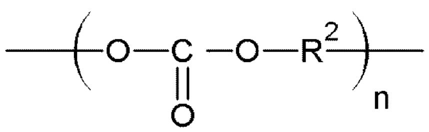
(2)

$R^2$ and n in Formula (2) are as described above.

[Chem. 9]

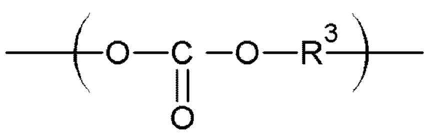
(3)

In Formula (3), $R^3$ denotes a hydrocarbon residue having a spiro-structure or a diphenylmethane structure, and the structure may contain a heteroatom.

Examples of the heteroatom include an oxygen atom, a sulfur atom, and a nitrogen atom.

The structure expressed by Formula (3) is considered to contribute to dispersibility in a hydrophobic solvent used in manufacture of the all-solid-state battery. The polymeric binder according to the present disclosure having the structure improves affinity of the polymeric binder for a hydrophobic solvent, reduces cohesion force in the hydrophobic solvent, and consequently improves dispersibility in the hydrophobic solvent; and therefore such a case is preferable.

When $R^3$ in Formula (3) is a hydrocarbon residue having a spiro-structure, the content ratio of the structural units expressed by Formula (1) and Formula (2) is 30% by mole or greater and 60% by mole or less with the total of Formula (1), Formula (2), and Formula (3) as a basis (in monomer units) and is more preferably 35% by mole or greater and 50% by mole or less. Note that a case that $R^1$ and $R^2$ have structures identical to that of $R^3$ is excluded in this mode.

When $R^2$ in Formula (3) is a hydrocarbon residue having a diphenylmethane structure, the content ratio of the structural units expressed by Formula (1) and Formula (2) is 30% by mole or greater and 80% by mole or less with the total of the structures expressed by Formula (1), Formula (2), and Formula (3) as a basis (in monomer units) and is more preferably 35% by mole or greater and 70% by mole or less.

When a hydrocarbon residue having a spiro-structure is used, $R^3$ in Formula (3) is preferably a hydrocarbon residue having a bicyclic or higher spiro-structure having one or more spiro-atoms and is more preferably a hydrocarbon residue having a tricyclic or higher spiro-structure. The number of atoms forming a ring is preferably 4 or greater and is more preferably 6 or greater. Further, it is more preferable when part of carbon atoms forming the ring is substituted by a heteroatom such as an oxygen atom.

In a case that $R^3$ in Formula (3) is a hydrocarbon residue having a bicyclic or higher spiro-structure or a spiro-structure with a four-membered or higher ring, bulkiness increases and dispersibility in slurry used during production of the all-solid-state battery increases; and further, when part of carbon atoms forming the ring is substituted by a heteroatom, affinity for a lithium salt increases; and therefore such a case is more preferable.

Examples of a hydrocarbon residue having a bicyclic or higher spiro-structure include a spiro[2.2]pentane-1,4-diyl group, a spiro[3.3]heptane-2,6-diyl group, a spiro[4.4]nonane-2,7-diyl group, a spiro[5.5]undecane-3,9-diyl group, a spiro[3.5]nonane-2,7-diyl group, a spiro[2.6]nonane-1,6-diyl group, a spiro[4.5]decane-1,5-diyl group, a dispiro[4.2.4.2]tetradecane-1,11-diyl group, a dispiro[4.1.5.2]tetradecane-2,12-diyl group, a 1,1'-spirobi[indene]-8,8'-diyl group, and a 1H,1'H-2,2'-spirobi[naphtalene]-9,9'-diyl group.

Examples of a hydrocarbon residue having a spiro-structure in which part of atoms forming the ring is substituted by a heteroatom such as an oxygen atom include a 2,2'-(2,4,8,10-tetraoxaspiro[5.5]undecane-3,9-diyl)dipropanediyl group (generic monomer name: spiroglycol), a2,2',3,3'-tetrahydro-1,1'-spirobi[indene]-7,7'-diyl group, a 4,8-dihydro-1H,1'H-2,4'-spirobi[quinoline]-6',7-diyl group, and a 4,4,4',4'-tetramethyl-2,2'-spirobi[chroman]-7,7'-diyl group.

A hydrocarbon residue having a spiro-structure may be saturated or unsaturated, and may be substituted by an alkoxy group, a cyano group, one of primary to tertiary amino groups, a halogen atom, or the like in the main chain or a side chain.

When a hydrocarbon residue having a diphenylmethane structure is used, $R^3$ in Formula (3) preferably has a diphenylmethane structure in which two hydrogen atoms bonded to the central carbon are substituted by the hydrocarbon residue. Further, the hydrocarbon residue bonded to the central carbon may be saturated or unsaturated, and the central carbon may be substituted by a heteroatom such as a sulfur atom or an oxygen atom.

In a case of a diphenylmethane structure in which two hydrogen atoms bonded to the central carbon are substituted by a hydrocarbon residue, dispersibility in slurry used during production of the all-solid-state battery increases; and therefore such a case is more preferable.

Examples of a hydrocarbon residue having a diphenylmethane structure in which two hydrogen atoms bonded to the central carbon are substituted by a hydrocarbon residue include a 4,4'-(propane-2,2-diyl)diphenyl group (generic monomer name: bisphenol A), a 4,4'-(butane-2,2-diyl)diphenyl group (generic monomer name: bisphenol B), a 4,4'-(propane-2,2-diyl)bis(2-methylphenyl) group (generic monomer name: bisphenol C), a 4,4'-(ethane-1,1-diyl)bis(2-methylphenyl) group (generic monomer name: bisphenol E), a 4,4'-(propane-2,2-diyl)bis(2-isopropylphenyl) group (generic monomer name: bisphenol G), and a 4,4'-(cyclohexane-1,1-diyl)diphenyl group (generic monomer name: bisphenol Z).

Further, examples of a hydrocarbon residue having a diphenylmethane structure in which two hydrogen atoms bonded to the central carbon are substituted by an unsaturated hydrocarbon residue include a 4,4'-(1-phenylethane-1,1-diyl)diphenyl group (generic monomer name: bisphenol AP), a 4,4'-(diphenylmethylene)diphenyl group (generic monomer name: bisphenol BP), and a 2,2'-(4,4'-(9H-fluorene-9,9-diyl)bis(4,1-phenylene))bisoxydiethyl group [generic monomer name: bisphenoxyethanolfluorene (BPEF)].

Further, examples of a hydrocarbon residue having a diphenylmethane structure in which the central carbon is substituted by a heteroatom such as a sulfur atom or an oxygen atom include a 4,4'-sulfonyldiphenyl group (generic monomer name: bisphenol S) and a 4,4'-oxydiphenyl group (generic monomer name: 4,4'-dihydroxydiphenylether).

For example, in the aforementioned second copolymerized aliphatic polycarbonate having the structures expressed by Formula (1), Formula (2), and Formula (3), each of the structures expressed by Formula (1) and Formula (2) exists in a block or randomly, and the structure expressed by Formula (3) exists in a block or randomly in the main chain.

When the structure expressed by Formula (3) exists in a block in the main chain, the structure expressed by Formula (3) preferably forms the block by connecting 1 to 10 units, more preferably by connecting one to five units, and particularly preferably by connecting one to three units. When the block is formed by connecting three units or less, dispersibility of the polymeric binder in a hydrophobic solvent improves.

The content ratio of the structural unit expressed by Formula (3) in the aforementioned copolymerized aliphatic polycarbonate is preferably 10% by mole or greater and 40% by mole or less with the total of the structures expressed by Formula (1), Formula (2), and Formula (3) as a basis (in monomer units) and is more preferably 20% by mole or greater and 35% by mole or less.

The copolymerized aliphatic polycarbonate having the structures expressed by Formula (1), Formula (2), and

Formula (3) can be manufactured by a generally known method. For example, the copolymerized aliphatic polycarbonate is acquired by performing transesterification between a diol compound in which a hydroxyl group is bonded to the end of the alkylene group denoted by $R^1$ and a diol compound in which a hydroxyl group is bonded to the end of the alkylene group denoted by $R^2$, and diphenyl carbonate and then further performing transesterification with diphenyl carbonate along with diol (such as bisphenol A) in which a hydroxyl group is bonded to the end of the hydrocarbon residue denoted by $R^3$.

Third, copolymerized aliphatic polycarbonate having structures expressed by Formula (1), Formula (2), Formula (3), and Formula (4) below is preferably used in the polymeric binder according to the present disclosure.

[Chem. 10]

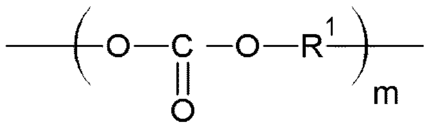
(1)

$R^1$ and m in Formula (1) are as described above.

[Chem.11]

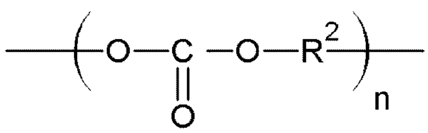
(2)

$R^2$ and n in Formula (2) are as described above.

[Chem. 12]

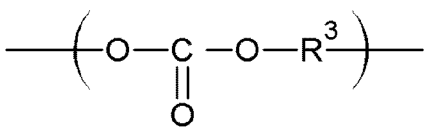
(3)

$R^3$ in Formula (3) is as described above.

[Chem. 13]

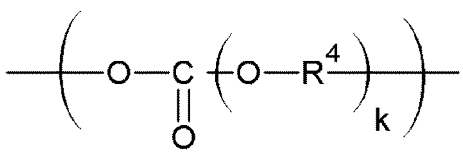
(4)

In Formula (4), $R^4$ denotes an aliphatic hydrocarbon residue having 2 to 10 carbon atoms, and k denotes an integer equal to or greater than 1 and equal to or less than 30.

The structure expressed by Formula (4) is considered to contribute to adhesiveness of the polymeric binder to a cathode/anode active material, a solid electrolyte, and a current collector being binding target materials in the all-solid-state battery. The polymeric binder according to the present disclosure having the structure increases flexibility and polarity of the polymeric binder and consequently improves adhesiveness to the binding target materials; and therefore such a case is preferable.

$R^4$ in Formula (4) is preferably an alkylene group having 2 to 10 carbon atoms and is more preferably an alkylene group having 2 to 4 carbon atoms. The number of carbon atoms being 2 or greater improves flexibility of the polymer

and therefore is more preferable.

Note that k in Formula (4) is preferably an integer equal to or greater than 1 and equal to or less than 20, is more preferably an integer equal to or greater than 2 and equal to or less than 10, and is particularly preferably an integer equal to or greater than 3 and equal to or less than 5. The value of k being 1 or greater increases flexibility of the copolymerized aliphatic polycarbonate, and the value being 5 or less improves adhesiveness to metal; and therefore such a case is more preferable.

Examples of the aliphatic hydrocarbon residue having 2 to 10 carbon atoms include chain aliphatic hydrocarbon groups such as an ethane-1,2-diyl group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, and a decane-1,10-diyl group, and branched aliphatic hydrocarbon groups such as a 1-methylethane-1,2-diyl group, a2-methylpropane-1,3-diyl group, a 2-methylbutane-1,4-diyl group, a 2-ethylbutane-1,4-diyl group, a 3-methylpentane-1,5-diyl group, a 3-methylpentane-1,5-diyl group, and a 2-methylhexane-1,6-diyl group.

The aliphatic hydrocarbon residue may be saturated or unsaturated, and may be substituted by an alkoxy group, a cyano group, one of primary to tertiary amino groups, halogen atom, or the like in the main chain or a side chain.

The content ratio of the structural unit expressed by Formula (4) in the copolymerized aliphatic polycarbonate is 5% by mole or greater and 40% by mole or less with the total of the structures expressed by Formula (1), Formula (2), Formula (3), and Formula (4) as a basis (in monomer units) and is more preferably 10% by mole or greater and 35% by mole or less. Note that a case that $R^1$ and $R^2$ have structures identical to that of $R^3$ is excluded in this mode. Further, a case that $R^1$, $R^2$, and $R^3$ have structures identical to that of $R^4$ is excluded when k is equal to 1.

For example, in the aforementioned third copolymerized aliphatic polycarbonate having the structures expressed by Formula (1), Formula (2), Formula (3), and Formula (4), each of the structures expressed by Formula (1) and Formula (2) exists in a block or randomly, and each of the structures expressed by Formula (3) and Formula (4) exists in a block or randomly in the main chain.

When the structure expressed by Formula (3)exists in a block, the structure expressed by Formula (3) preferably forms the block by connecting 1 to 10 units, preferably by connecting one to five units, and particularly preferably by connecting one to three units. When the block is formed by connecting three units or less, dispersibility of the polymeric binder in a hydrophobic solvent improves.

Further, when the structure expressed by Formula (4) exists in a block, the structure expressed by Formula (4) preferably forms the block by connecting 1 to 10 units, more preferably by connecting one to five units, and particularly preferably by connecting one to three units. When the block is formed by connecting three units or less, dispersibility of the polymeric binder in a hydrophobic solvent and a binding property of the polymeric binder coexist; and therefore such as case is preferable.

The copolymerized aliphatic polycarbonate having the structures expressed by Formula (1), Formula (2), Formula (3), and Formula (4) can be manufactured by a generally known method. For example, the copolymerized aliphatic polycarbonate is acquired by performing transesterification between a diol compound in which a hydroxyl group is bonded to the end of the aliphatic hydrocarbon residue denoted by $R^1$ and a diol compound in which a hydroxyl group is bonded to the end of the aliphatic hydrocarbon residue denoted by $R^2$, and diphenyl carbonate and then further performing transesterification with diphenyl carbonate along with a diol compound in which a hydroxyl group is bonded to the end of the hydrocarbon residue denoted by $R^3$ and a diol compound (such as diethylene glycol, triethylene glycol, or polyethylene glycol) having a structure expressed by the inner parentheses in Formula (4).

The copolymerized aliphatic polycarbonate according to the present disclosure may not only be a non-cross-linked type acquired by the aforementioned method but also be a three-dimensional cross-linked type. In the case of the three-dimensional cross-linked type, the cross-linked structure becomes uniform, and dispersibility of the polymeric binder in a hydrophobic solvent improves; and therefore such a case is preferable.

When the copolymerized aliphatic polycarbonate is a three-dimensional cross-linked type, a generally known manufacturing method can be used. For example, three-dimensional cross-linked copolymerized aliphatic polycarbonate is acquired by carbonate bonding an copolymerized aliphatic polycarbonate compound having the structural units expressed by Formula (1) and Formula (2) [and a diol compound in which a hydroxyl group is bonded to the end of the hydrocarbon residue denoted by $R^3$ in Formula (3) and a diol compound having the structure expressed by the inner parentheses in Formula (4) as needed] to a cross-linker. In addition, the cross-linker may be previously mixed with a monomer and caused to react with the monomer.

The cross-linker is not limited as long as the cross-linker is a compound carbonated with a hydroxy group at the end of the copolymerized aliphatic polycarbonate or a compound containing three or more functional groups that directly reacts with a hydroxy group, and a compound containing three or more hydroxy groups, epoxy groups, isocyanate groups, carboxy groups, or amino groups is used.

Examples of the compound containing three or more hydroxy groups that may be used include polyol such as glycerin, trimethylolpropane, and pentaerythritol. Only one type of the polyol may be used, or two or more types may be used together.

Examples of the compound containing three or more epoxy groups include tris(4-hydroxyphenyl)methane triglycidyl ether, triglycidyl isocyanurate, and tetraphenylolethane glycidyl ether.

Examples of the compound containing three or more isocyanate groups include triphenylmethane-4,4',4"-triisocyanate, methylsilanetriyl isocyanate silane, and tetraisocyanate silane.

Examples of the compound containing three or more carboxy groups include 1,3,5-pentanetricarboxylic acid, 1,3,5-tris(4-carboxyphenyl)benzene, and 1,2,3,4-butanetetracarboxylic acid.

Examples of the compound containing three or more amino groups include 1,3,5-triazine-2,4,6-triamine, butane-1,1,4,4-tetraamine, and benzene-1,1,4,4-tetraamine.

In the present disclosure, a method of carbonating polyol containing three or more hydroxy groups is preferably used, and use of pentaerythritol is most preferable.

Solvent solubility of a solid solution with a metallic salt appears only when the cross-link density is in a proper range in the three-dimensional cross-linked copolymerized aliphatic polycarbonate. Accordingly, as will be described later, when a metallic salt is contained in the polymeric binder according to the present disclosure, the molar ratio of polycarbonate to a cross-linker used in manufacture of the three-dimensional cross-linked copolymerized aliphatic polycarbonate (polycarbonate: cross-linker) is preferably (99.99:0.01) to (90:10), is more preferably (99.95:0.05) to (95:5), and is further preferably (99.9:0.1) to (99.0:1.0).

When the cross-link density is decreased by decreasing the ratio of the cross-linker below 0.01 in the aforementioned ratio (polycarbonate:polyol), a degree of solubility of the polymeric binder forming a solid solution with a metallic salt in a hydrophobic solvent tends to decline. Further, when the ratio of the polyol exceeds 10, the cross-link density increases, gelling occurs, and the solvent solubility declines.

The polymeric binder according to the present disclosure may contain metal or a metallic salt. Containing metal or a metallic salt improves the ionic conductivity of the polymeric binder and therefore is preferable.

For example, when sulfide is used as a solid electrolyte of the all-solid-state secondary battery, the ionic conductivity of the sulfide may decline due to the sulfide becoming fragile or being denatured by heat, and therefore a binder may not be removed by heat treatment. By causing the polymeric binder to contain metal or a metallic salt, the present disclosure provides an effect of the metal or the metallic salt contained in the polymeric binder assisting ionic conduction in the cathode, the anode, or the solid electrolyte layer even when the binder is not finally removed.

Examples of the metallic salt that can be contained in the polymeric binder include lithium salts such as $LiN(SO_2F)_2$ (generic name: LiFSI), $LiN(SO_2CF_3)_2$ (generic name: LiTFSI), $LiN(SO_2C_2H_5)_2$, $LiPF_6$, and $LiBF_4$. The metallic salt may contain another component such as an inorganic salt of alkali metal.

The polymeric binder according to the present disclosure is used for binding together a cathode mixture, an anode mixture, and a solid electrolyte in the all-solid-state secondary battery. In other words, the polymeric binder according to the present disclosure desirably permeates among the cathode mixture, the anode mixture, and the solid electrolyte during the manufacturing process. When an all-solid-state secondary battery using sulfide as a solid electrolyte layer is manufactured, slurry using a hydrophobic solvent such as chloroform or anisole is used in the manufacturing process by preference. The polymeric binder according to the present disclosure excellently disperses in a hydrophobic solvent and therefore is preferably used when sulfide is used as the solid electrolyte layer.

Examples of the hydrophobic solvent include aliphatic hydrocarbons such as pentane, hexane, heptane, octane, nonane, and decane, aromatic hydrocarbons such as benzene, toluene, and xylene, halogen-substituted hydrocarbons such as chloroform, dichloromethane, and carbon tetrachloride, halogen-substituted aromatic hydrocarbons such a chlorobenzene and bromobenzene, and aromatic ether such as anisole; and chloroform or anisole in particular is preferably used.

Accordingly, the dispersion ratio of the polymeric binder according to the present disclosure in chloroform or anisole is preferably 70% or greater and is more preferably 80% or greater from a viewpoint that higher dispersibility in a hydrophobic solvent is preferable.

Note that the dispersion ratio is calculated by Equation (a) below.

$$\text{dispersion ratio (\%)} = (\text{residual amount}/\text{theoretical amount}) \times 100 \ldots \text{(a)}$$

The "theoretical amount" in the above equation refers to, assuming that the total amount of a sample polymeric binder disperses in chloroform or anisole, the mass (g) of the polymeric binder calculated from the concentration (% by mass) of the polymeric binder in the fluid dispersion and the mass (g) of the collected fluid dispersion.

Further, the "residual amount" refers to the mass (g) of the actually residual sample polymeric binder when the collected fluid dispersion is dried and the chloroform is removed.

Further, when the polymeric binder contains a solid electrolyte, since a solid electrolyte generally has low solubility in a hydrophobic solvent, the solid electrolyte may not disperse in the hydrophobic solvent, and separation and precipitation of the solid electrolyte may occur. Therefore, when a solid electrolyte is contained in the polymeric binder

according to the present disclosure, the solid electrolyte can be dispersed in a hydrophobic solvent by using the three-dimensional cross-linked copolymerized aliphatic polycarbonate. Specifically, a solid electrolyte can be contained in the polymeric binder by mixing and dispersing the three-dimensional cross-linked copolymerized aliphatic polycarbonate and the solid electrolyte in a hydrophilic solvent such as acetonitrile, drying the dispersion, and volatilizing the solvent.

The all-solid-state secondary battery according to the present disclosure includes a cathode, an anode, and a solid electrolyte layer positioned between the cathode and the anode, and at least one of the components contains the polymeric binder according to the present disclosure or uses the polymeric binder during manufacture. Further, a binder other than the polymeric binder according to the present disclosure may be contained in the all-solid-state secondary battery according to the present disclosure or may be used during manufacture of the all-solid-state secondary battery. Examples of a binder other than the polymeric binder according to the present disclosure include styrene-butadiene rubber, PVDF, PTFE, and acrylic resin.

Examples of the solid electrolyte used in the solid electrolyte layer include solid sulfide expressed by $Z_2S\text{-}M_xS_y$. Note that Z in the formula denotes Li or Na, M denotes P, Si, Ge, B, Al, or Ga, and each of x and y denotes a number based on stoichiometry according to the type of M. Examples of $M_xS_y$ include solid sulfides such as $P_2S_5$, $SiS_2$, $GeS_2$, $B_2S_3$, $Al_2S_3$, and $Ga_2S_3$.

Examples of $Z_2S\text{-}M_xS_y$ include $Li_2S\text{-}P_2S_5$ and $Li_2S\text{-}SiS_2$. Further, the aforementioned solid sulfide may contain $M_xS_y$ with a different type of M.

Furthermore, solid sulfide expressed by $Z_2S\text{-}M_nS_m\text{-}ZX$ may be used as the solid electrolyte. Note that Z in the formula denotes Li, M denotes P, Si, Ge, B, Al, or Ga, X denotes Cl, Br, or I, and each of n and m denotes a number based on stoichiometry according to the type of M.

Examples of $M_nS_m$ include solid sulfides such as $P_2S_5$, $SiS_2$, $GeS_2$, $B_2S_3$, $Al_2S_3$, and $Ga_2S_3$.

Examples of $Z_2S\text{-}M_nS_m\text{-}ZX$ include $Li_2S\text{-}P_2S_5\text{-}LiCl$, $Li_2S\text{-}P_2S_5\text{-}LiBr\text{-}LiCl$, and $Li_2S\text{-}SiS_2\text{-}LiBr$.

Examples of a solid sulfide electrolyte used in the solid electrolyte layer in addition to the above include $Li_{10}GeP_2S_{12}$ (generic name: LGPS) and $Li_{10}SnP_2S_{12}$.

Only one type of the solid sulfide may be used, or a plurality of types may be used in combination.

Further, in addition to the solid sulfide, solid oxides such as $Li_7La_3Zr_2O_{12}$ (generic name: LLZO) or $Li_{1.3}Al_{0.3}Ti_{1.7}(PO_4)_3$ (generic name: LATP) may be used as the solid electrolyte. Only one type of the solid electrolyte may be used, or a plurality of types may be used in combination.

A preferred solid electrolyte is $Li_2S\text{-}P_2S_5$, and for example, the molar ratio of $Li_2S$ to $P_2S_5$ is particularly preferably $Li_2S:P_2S_5$ = 50:50 to 95:5.

The cathode contains a cathode active material and the solid electrolyte and may further contain the polymeric binder according to the present disclosure.

A generally known cathode active material usable in an all-solid-state secondary battery can be used as the cathode active material. Examples of such a cathode active material include $LiCoO_2$, $LiNiO_2$, $Li_{1+x}Ni_{1/3}Mn_{1/3}Co_{1/3}O_2$ (where x is a positive number), $LiMn_2O_4$, $Li_{1+x}Mn_{2-x-y}M_yO_4$ (where M is at least one type of metal selected from Al, Mg, Co, Fe, Ni, and Zn, and x and y are positive numbers), $Li_xTiO_y$ (where x and y are positive numbers), and $LiMPO_4$ (where M is Fe, Mn, Co, or Ni).

In addition to the cathode active material, the solid electrolyte, and the polymeric binder according to the present disclosure, another component such as a conductive assistant may be contained in the cathode.

Examples of the conductive assistant include carbon black such as acetylene black and ketjen black, a carbon nanotube, natural graphite, synthetic graphite, and a vapor phase growth carbon fiber [VGCF (registered trademark)].

While the amount of another component contained in the cathode is not particularly limited, the content ratio is preferably 10% by mass or less.

The cathode may be formed on a current collector. For example, metal, such as aluminum, formed in a plate shape may be used as the current collector.

The anode contains an anode active material and the solid electrolyte and may further contain the polymeric binder according to the present disclosure.

A generally known anode active material usable in an all-solid-state secondary battery can be used as the anode active material. Examples of such an anode active material include carbon materials such as mesocarbon microbeads, graphite, hard carbon, and soft carbon, lithium titanium oxides such as $Li_4Ti_5O_{12}$, and metal such as Li.

In addition to the anode active material, the solid electrolyte, and the additive, the anode may contain other components such as an inorganic salt of alkali metal and a conductive assistant. Other components exemplified in the description of the solid electrolyte layer may be used as the other components for the anode. The amount of other components contained in the anode is preferably 10% by mass or less.

The anode may be formed on a current collector. Examples of the current collector that may be used include copper and stainless metal each formed in a plate shape.

One cell of the all-solid-state secondary battery according to the present disclosure is constituted of the cathode, the solid electrolyte layer, and the anode. The all-solid-state secondary battery may be constituted by only one cell but

may also be constituted as an aggregate by connecting a plurality of cells in series or in parallel.

The cathode, the anode, or the solid electrolyte layer can be acquired by undergoing a process of acquiring slurry by dissolving or dispersing raw materials, that is, the materials mentioned in the respective descriptions and the polymeric binder according to the present disclosure in an organic solvent (slurry manufacturing process) and a process of applying and drying the slurry on a substrate (application-drying process).

A solvent not affecting properties of the solid electrolyte and the active material and dissolving or dispersing the polymeric binder according to the present disclosure is used as the organic solvent. Specific examples of the organic solvent include saturated chain hydrocarbons such as n-pentane, n-hexane, heptane, n-octane, nonane, decane, undecane, dodecane, tridecane, and tetradecane, halogen-substituted saturated chain hydrocarbons such as carbon tetrachloride, chloroform, and dichloroethane, saturated cyclic hydrocarbons such as cyclohexane, cycloheptane, and cyclooctane, aromatic hydrocarbons such as benzene, toluene, and xylene, halogen-substituted aromatic hydrocarbons such as chlorobenzene and bromobenzene, oxygen-containing chain hydrocarbons such as dioxane, methyl ethyl ketone, propylene carbonate, trioxaundecane, trioxanonane, trioxapentadecane, diethylene glycol dimethyl ether, and diethylene glycol dimethyl ether, nitrogen-containing saturated hydrocarbons such as triethylamine, propanenitrile, dimethyldiazohexane, trimethyltriazononane, N,N,N',N'-tetramethylethylenediamine, and N,N,N',N",N"-pentamethyldiethylenetriamine, and oxygen-containing aromatic hydrocarbons such as anisole. When sulfide is used as the solid electrolyte layer, the organic solvent is preferably a hydrophobic solvent such as chloroform or anisole.

The organic solvent is used at an amount allowing application of a solution or a fluid dispersion of the raw materials.

A condition for dissolution or dispersion of the solid electrolyte and the polymeric binder according to the present disclosure in an organic solvent is not particularly limited as long as the dissolution or the dispersion is sufficiently performed. The dissolution or the dispersion may be performed at normal temperatures (such as 25°C) and cooling or heating may be performed as needed. Further, the dissolution or the dispersion may be performed under one of pressure conditions of normal pressure, decreased pressure, and increased pressure as needed.

The cathode, the anode, and the solid electrolyte layer can be acquired by applying slurry of each raw material of the cathode, the anode, and the solid electrolyte on a substrate and then drying the acquired coated film.

The substrate on which slurry is applied is not particularly limited. For example, when manufacture of solid electrolyte slurry is performed at the same time as manufacture of the cathode, the current collector, the solid electrolyte layer, or the cathode may be used as the substrate. Examples of the method of application include application by an applicator, a doctor blade, or a bar coater, brushing, roll coating, spray coating, and electrospray coating.

The thus acquired cathode, solid electrolyte layer, and anode are laminated in this order and then are made into a laminated body by being pressed in a laminating direction in such a way as to be adhered to each another. By heat treating the laminated body as needed, the all-solid-state secondary battery according to the present disclosure can be acquired.

The heat treatment of the laminated body may be performed in an inert atmosphere such as nitrogen or argon as needed. Further, the heat treatment may be performed at normal pressure, at reduced pressure, or at increased pressure. Furthermore, the heat treatment is preferably performed by heating at or below a temperature at which the crystal structure of the solid electrolyte does not change. Denoting the decomposition starting temperature of the polymeric binder according to the present disclosure by T°C, a more preferable heat treatment temperature is a temperature in a range from T-25°C to T+50°C. Further, while varying by the size and the number of layers of the laminated body and the heat treatment temperature, the heat treatment time is normally 3 to 60 minutes and is more preferably 5 to 30 minutes. Further, the solid electrolyte layer, the cathode, and the anode may individually undergo heat treatment, and the treatment may be performed after laminating the components.

While the present disclosure will be specifically described below by citing examples, the scope of the present disclosure is not limited by the examples.

Weight-average Molecular Weight and Molecular Weight Distribution

A weight-average molecular weight (Mw) and a molecular weight distribution (Mw/Mn) were found from values of a weight-average molecular weight (Mw) and a number-average molecular weight (Mn) in terms of standard polystyrene that were measured by gel permeation chromatography (GPC). The molecular weight distribution (Mw/Mn) refers to a value expressed by a ratio of the weight average (Mw) to the number-average molecular weight (Mn).

The GPC measurement was performed by using a differential refractometer WATERS 410 manufactured by Waters Corporation as a detector, a MODEL510 high performance liquid chromatography as a pump, and two pieces of Shodex GPC HFIP-806L connected in series as a column. The measurement condition was a flow speed of 1.0 mL/min, use of chloroform as a solvent, and injection of 0.1 mL of a solution at a sample concentration of 0.2 mg/mL.

Glass Transition Temperature

A glass transition temperature was measured by a differential scanning type calorimeter (Q20) manufactured by TA Instruments with 10 mg of a sample in an atmosphere of nitrogen, the temperature being raised from -100°C to 200°C at a speed of 20°C/min.

Polymer Structure

With regard to a polymer structure, $^1$H-NMR in a deuterated chloroform solution was measured by using a nuclear magnetic resonance device JNM-ECA600 spectrometer manufactured by JEOL Ltd., and the structure was confirmed.

Example 1

Synthesis of three-dimensional cross-linked copolymerized aliphatic polycarbonate was performed in accordance with the following operation.

1. Preparation of Copolymerized aliphatic polycarbonate

55.2 g (612.5 mmol) of 1,4-butanediol, 15.3 g (87.5 mmol) of 1,10-decanediol, 150.0 g (700 mmol) of diphenyl carbonate (manufactured by Aldrich), and 0.59 mg (7 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours. Subsequently, stirring was performed for five minutes at 260°C at reduced pressure, and a polymerization reaction was carried out. After completion of the reaction, the three-necked flask was cooled, and copolymerized aliphatic polycarbonate E was acquired. The weight-average molecular weight of the acquired copolymerized aliphatic polycarbonate E was $3.0 \times 10^3$ (Mw/Mn = 2.0). The structure of the acquired copolymerized aliphatic polycarbonate E was confirmed by $^1$H-NMR The decomposition starting temperature and the decomposition ending temperature of the copolymerized aliphatic polycarbonate E were 335°C and 380°C, respectively.

The decomposition temperature was measured by raising the temperature of 15 mg of a sample from 20°C to 500°C at a speed of 10°C/min in an atmosphere of nitrogen and then keeping the temperature for 30 minutes, by using TG-DTA 8122/C-SL manufactured by Rigaku Corporation.

2. Cross-linking Reaction

150 g (50 mmol) of the acquired copolymerized aliphatic polycarbonate E, 0.73 g (5 mmol) of pentaerythritol (manufactured by Wako Pure Chemical Industries, Ltd.), 11.5 g (53 mmol) of diphenyl carbonate, and 0.04 mg (0.5 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours. Subsequently, stirring was performed for five minutes at 260°C at reduced pressure, and a polymerization reaction was carried out. After completion of the reaction, the three-necked flask was cooled, and three-dimensional cross-linked copolymerized aliphatic polycarbonate E1 was acquired. The weight-average molecular weight of the acquired three-dimensional cross-linked copolymerized aliphatic polycarbonate E1 was $7.2 \times 10^4$ (Mw/Mn = 4.4). The structure of the acquired three-dimensional cross-linked copolymerized aliphatic polycarbonate E1 was confirmed by $^1$H-NMR (FIG. 1). The decomposition starting temperature and the decomposition ending temperature of the three-dimensional cross-linked copolymerized aliphatic polycarbonate E1 were 340°C and 382°C, respectively.

3. Manufacture of Polymeric Binder Membrane

Next, a polymeric binder membrane was manufactured from the acquired three-dimensional cross-linked copolymerized aliphatic polycarbonate E1 as described above by the following method.

A fluid dispersion E1-2 containing the polymeric binder at a concentration of 30% by mass was acquired by mixing the three-dimensional cross-linked copolymerized aliphatic polycarbonate E1 acquired in Example 1 with LiFSI weighed in such a way that the content ratio of LiFSI was 32% by mass (Example 1-2) and sufficiently stirring the mix in acetonitrile. Subsequently, 1 mL of the fluid dispersion E1-2 of the polymeric binder was uniformly applied on a region

with sides of 5 cm on one side of a copper thin film by using a micropipetter. A transparent polymeric binder membrane E1-2 having a LiFSI content ratio of 32% by mass and a thickness of 0.065 mm was acquired by performing drying for three hours at 60°C and then further performing drying for three hours at 60°C at reduced pressure (Table 1).

A white polymeric binder membrane E1-1 having a LiFSI content ratio of 0% by mass (Example 1-1) and a thickness of 0.058 mm was acquired by a procedure similar to that in Example 1-2 except for not using LiFSI (Table 1).

Example 2

A polymeric binder based on non-cross-linked copolymerized aliphatic polycarbonate E2 was acquired by performing a procedure similar to that in Example 1 except for not using pentaerythritol. The weight-average molecular weight of the acquired non-cross-linked copolymerized aliphatic polycarbonate E2 was $7.1 \times 10^4$ (Mw/Mn = 1.9). The structure of the acquired non-cross-linked copolymerized aliphatic polycarbonate E2 was confirmed by $^1$H-NMR (FIG. 2). The decomposition starting temperature and the decomposition ending temperature of the non-cross-linked copolymerized aliphatic polycarbonate E2 were 339°C and 378°C, respectively.

A transparent polymeric binder membrane E2-1 and a polymeric binder membrane E2-2 having LiFSI content ratios of 0% by mass (Example 2-1) and 32% by mass (Example 2-2) and thicknesses of 0.053 mm and 0.051 mm, respectively, were acquired by a procedure similar to that in Example 1 except for using the non-cross-linked copolymerized aliphatic polycarbonate E2 in place of the three-dimensional cross-linked copolymerized aliphatic polycarbonate E1 (Table 1).

Example 3

The copolymerized aliphatic polycarbonate E was acquired by performing a procedure similar to that in Example 1, and subsequently a copolymerization reaction was carried out as follows.

30 g (10 mmol) of the acquired copolymerized aliphatic polycarbonate E, 0.35 g (3 mmol) of pentaerythritol (manufactured by Wako Pure Chemical Industries, Ltd.), 46.2 g (152 mmol) of spiroglycol, 22.8 g (152 mmol) of triethylene glycol, 68.5 g (320 mmol) of diphenyl carbonate, and 0.27 mg (3 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours.

Next, stirring was performed for five minutes at 260°C at reduced pressure, and a polymerization reaction was carried out. After completion of the reaction, the three-necked flask was cooled. The weight-average molecular weight of acquired three-dimensional cross-linked copolymerized aliphatic polycarbonate E3 was $1.7 \times 10^5$ (Mw/Mn = 3.4). The structure of the acquired three-dimensional cross-linked copolymerized aliphatic polycarbonate E3 was confirmed by $^1$H-NMR The decomposition starting temperature and the decomposition ending temperature of the three-dimensional cross-linked copolymerized aliphatic polycarbonate E3 were 337°C and 417°C, respectively.

A fluid dispersion E3-2 containing the polymeric binder at a concentration of 30% by mass was acquired by mixing the acquired three-dimensional cross-linked copolymerized aliphatic polycarbonate E3 with LiFSI weighed in such a way that the content ratio in the polymeric binder was 32% by mass and sufficiently stirring the mix in THF

Next, 1 mL of the fluid dispersion E3-2 of the polymeric binder was uniformly applied on a region with sides of 5 cm on one side of a copper thin film by using a micropipetter. A transparent polymeric binder membrane E3-2 constituted of a polymeric binder and having a LiFSI content ratio of 32% by mass and a thickness of 0.131 mm was acquired by performing drying for three hours at 60°C and then further performing drying for four hours at 55°C at reduced pressure (Example 3-2 and Table 1).

A fluid dispersion E3-1 and a fluid dispersion E3-3 of the polymeric binder having LiFSI content ratios of 0% by mass and 50% by mass, respectively, were prepared by a similar procedure, and a transparent polymeric binder membrane E3-1 and a polymeric binder membrane E3-3 having thicknesses of 0.166 mm and 0.261 mm, respectively, were acquired (Examples 3-1 and 3-3, and Table 1).

Example 4

The copolymerized aliphatic polycarbonate E was acquired by performing a procedure similar to that in Example 1, and a copolymerization reaction was subsequently carried out as follows.

75 g (25 mmol) of the acquired copolymerized aliphatic polycarbonate E, 0.49 g (4 mmol) of pentaerythritol (manufactured by Wako Pure Chemical Industries, Ltd.), 49.3 g (216 mmol) of bisphenol A, 53.5 g (250 mmol) of diphenyl carbonate and 0.21 mg (2 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the

pressure was reduced at 1 kPa/min, and stirring was performed for two hours.

Next, stirring was performed for five minutes at 260°C at reduced pressure, and a polymerization reaction was carried out. After completion of the reaction, the three-necked flask was cooled. The weight-average molecular weight of the acquired three-dimensional cross-linked copolymerized aliphatic polycarbonate E4 was $4.2 \times 10^4$ (Mw/Mn = 2.4). The structure of the acquired three-dimensional cross-linked copolymerized aliphatic polycarbonate E4 was confirmed by $^1$H-NMR The decomposition starting temperature and the decomposition ending temperature of the three-dimensional cross-linked copolymerized aliphatic polycarbonate E4 were 331°C and 383°C, respectively.

A fluid dispersion E4-1 and a fluid dispersion E4-2 of the polymeric binder having LiFSI content ratios of 0% by mass and 32% by mass, respectively, were prepared by a procedure similar to that in Example 3 except for using the acquired three-dimensional cross-linked copolymerized aliphatic polycarbonate E4, and by using the acquired fluid dispersion E4-1 and fluid dispersion E4-2, a transparent polymeric binder membrane E4-1 and a polymeric binder membrane E4-2 having thicknesses of 0.199 mm and 0.049 mm, respectively, were acquired (Examples 4-1 and 4-2, and Table 1).

Example 5

Three-dimensional cross-linked copolymerized aliphatic polycarbonate E5 was acquired by performing a procedure similar to that in Example 4 except for using 4,4'-dihydroxydiphenylether in place of bisphenol A. The weight-average molecular weight of the acquired three-dimensional cross-linked copolymerized aliphatic polycarbonate E5 was $4.2 \times 10^4$ (Mw/Mn = 3.2). The structure of the acquired three-dimensional cross-linked copolymerized aliphatic polycarbonate E5 was confirmed by $^1$H-NMR The decomposition starting temperature and the decomposition ending temperature of the three-dimensional cross-linked copolymerized aliphatic polycarbonate E5 were 330°C and 383°C, respectively.

A fluid dispersion E5-1 and a fluid dispersion E5-2 of the polymeric binder having LiFSI content ratios of 0% by mass and 32% by mass, respectively, were prepared by a procedure similar to that in Example 3 except for using the acquired three-dimensional cross-linked copolymerized aliphatic polycarbonate E5, and by using the acquired fluid dispersion E5-1 and fluid dispersion E5-2, a transparent polymeric binder membrane E5-1 and a polymeric binder membrane E5-2 having thicknesses of 0.176 mm and 0.053 mm, respectively, were acquired (Examples 5-1 and 5-2, and Table 1).

Example 6

The copolymerized aliphatic polycarbonate E was acquired by performing a procedure similar to that in Example 1, and a copolymerization reaction was subsequently carried out as follows.

30 g (10 mmol) of the acquired copolymerization aliphatic polycarbonate E, 0.28 g (2 mmol) of pentaerythritol (manufactured by Wako Pure Chemical Industries, Ltd.), 36.9 g (121 mmol) of spiroglycol, 12.1 g (81 mmol) of triethylene glycol, 44.1 g (206 mmol) of diphenyl carbonate, and 0.17 mg (2 μmol) of sodium hydrogencarbonate were put into a 0.3 L three-necked flask equipped with a stirrer, a nitrogen gas introduction pipe, a thermometer, a vacuum controller, and a reflux cooling pipe, and the temperature was raised to 200°C while stirring was performed. Next, the temperature was raised at 0.5°C/min while the pressure was reduced at 1 kPa/min, and stirring was performed for two hours.

Next, stirring was performed for five minutes at 260°C at reduced pressure, and a polymerization reaction was carried out. After completion of the reaction, the three-necked flask was cooled. The weight-average molecular weight of acquired three-dimensional cross-linked copolymerized aliphatic polycarbonate E6 was $4.7 \times 10^4$ (Mw/Mn = 2.1). The structure of the acquired three-dimensional cross-linked copolymerized aliphatic polycarbonate E6 was confirmed by $^1$H-NMR

The decomposition starting temperature and the decomposition ending temperature of the three-dimensional cross-linked copolymerized aliphatic polycarbonate E6 were 364°C and 417°C, respectively.

A fluid dispersion E6-2 containing the polymeric binder at a concentration of 30% by mass was acquired by mixing the acquired three-dimensional cross-linked copolymerized aliphatic polycarbonate E6 with LiFSI weighed in such a way that the content ratio in the polymeric binder was 32% by mass and sufficiently stirring the mix in THF

Next, 1 mL of the fluid dispersion E6-2 of the polymeric binder was uniformly applied on a region with sides of 5 cm on one side of a copper thin film by using a micropipetter. A transparent polymeric binder membrane E6-2 constituted of a polymeric binder and having a LiFSI content ratio of 32% by mass and a thickness of 0.237 mm was acquired by performing drying for three hours at 60°C and then further performing drying for four hours at 55°C at reduced pressure (Example 6-2 and Table 1).

A fluid dispersion E6-1 and a fluid dispersion E6-3 of the polymeric binder having LiFSI content ratios of 0% by mass and 50% by mass, respectively, were prepared by a similar procedure, and a transparent polymeric binder membrane E6-1 and a polymeric binder membrane E6-3 having thicknesses of 0.125 mm and 0.146 mm, respectively, were acquired (Examples 6-1 and 6-3, and Table 1).

Performance evaluation of the polymeric binders and the polymeric binder membranes was performed in accordance with the following method.

Performance evaluation of the polymeric binders was performed in accordance with the following method.

Glass Transition Temperature Evaluation

It is confirmed that the glass transition temperature of the polymeric binder in Example 2-2 is about the same as that of the polymeric binder in Example 2-1 and that sufficiently low value is maintained after addition of LiFSI, as indicated in Table 1. Further, it is confirmed that the glass transition temperature of the polymeric binder in Example 1 is about the same as that of the polymeric binder in Example 2 and that the polymeric binder has a desirable property as a polymeric binder after introduction of the three-dimensional cross-linked structure. Furthermore, it is confirmed that when LiFSI is added for the purpose of reducing the resistance value of a binder, the glass transition temperatures of the polymeric binders in Examples 3 to 6 are lower than that of the polymeric binder in Example 2 and that the polymeric binders have a desirable property as a polymeric binder after copolymerization of spiroglycol and triethylene glycol, bisphenol A, and diphenyl ether.

Binding Property Evaluation

Two types of binding property evaluation of a polymeric binder to an inorganic solid electrolyte and a current collecting foil were performed as follows: (i) a binding property to an aluminum foil and (ii) a binding property to a sulfide-based solid electrolyte.

(i) Binding Property to Aluminum Foil

Evaluation was performed based on adhesiveness to an aluminum foil(adhesiveness), which is a common evaluation method for a binder for a lithium ion secondary battery. Specifically, the evaluation was performed by the following method.

Binding Property Evaluation of Examples 1 and 2

2.5 mL of each of the 30% by mass acetonitrile fluid dispersions of the polymeric binder acquired in Examples 1 and 2 was uniformly applied on a region 150 mm long and 60 mm wide on an aluminum foil.

Next, drying was performed for one hour at 100°C and then drying was further performed for two hours at 60°C at reduced pressure. Another aluminum foil was overlaid on the acquired sheet sample, and pressing was performed for 2 minutes under a condition of 60°C and 0.5 MPa. A sample for peeling testing was produced by cutting out the pressed aluminum sheet into a piece 200 mm long and 25 mm wide in such a way that the polymer part was contained. The sample for peeling testing was set on AG-100B manufactured by Shimadzu Corporation with a chuck space of 20 mm, and peel force (N) was measured at a speed of 10 mm/min. The average value of peel force between 60 and 100 mm in a 200 mm measurement range was calculated and was determined to be the binding property of the polymeric binder (Table 1).

It is found that, as the amount of contained lithium salt (LiFSI) increases, the peel force of the polymeric binder in Example 1 increases and the binding property of the polymeric binder improves, as indicated in Table 1. Further, from comparison of peel force between the polymeric binder using the three-dimensional cross-linked copolymerized aliphatic polycarbonate in Example 1 and the polymeric binder using the non-cross-linked copolymerized aliphatic polycarbonate in Example 2, it is confirmed that the polymeric binder in Example 1 has a higher peel force and a higher binding property.

Binding Property Evaluation of Examples 3 to 6

2.5 mL of each of the 15% by mass THF fluid dispersion of the polymeric binder acquired in Examples 3 to 6 is uniformly applied on a region 150 mm long and 60 mm wide on an aluminum foil.

Next, drying was performed for one hour at 60°C, and then drying was further performed for four hours at 55°C at reduced pressure. Another aluminum foil was overlaid on the acquired sheet sample, and pressing was performed for 2 minutes under a condition of 60°C and 0.5 MPa. A sample for peeling testing was produced by cutting out the pressed aluminum sheet into a piece 200 mm long and 25 mm wide in such a way that the polymeric binder was contained. The sample for peeling testing was set on AG-100B manufactured by Shimadzu Corporation with a chuck space of 20 mm, and peel force (N) was measured at a speed of 10 mm/min. The average value of peel force between 60 and 100 mm out of a 200 mm measurement range was calculated and was determined to be the binding property of the polymeric binder (Table 1).

It is found that, as the amount of contained lithium salt increases, the peel force of the polymeric binders in Examples 1 and 3 increases, and the binding property of the polymeric binders improves, as indicated in Table 1. Further, from comparison of peel force between the polymeric binder using the three-dimensional cross-linked copolymerized aliphatic polycarbonate in Example 1 and the polymeric binder using the non-cross-linked copolymerized aliphatic polycarbonate in Example 2, it is confirmed that the polymeric binder using the three-dimensional cross-linked copolymerized aliphatic polycarbonate in Example 1 has a higher peel force and a higher binding property. Furthermore, from comparison of peel force between the three-dimensional cross-linked copolymerized aliphatic polycarbonate in Examples 3 and 6, and the non-cross-linked copolymerized aliphatic polycarbonate in Example 2, it is confirmed that the three-dimensional cross-linked copolymerized aliphatic polycarbonate in Examples 3 and 6 has higher peel force, and copolymerization of spiroglycol (generic name: SPG) and triethylene glycol (generic name: TEG) improves adhesiveness.

(ii) Binding Property to Sulfide-Based Solid Electrolyte

Binding property evaluation of the polymeric binders on a sulfide-based solid electrolyte was performed as follows.

A polymeric binder B6 was produced by performing drying the polymeric binder fluid dispersion (LiFSI = 50% by mass) produced in Example 6 for five hours at 60°C and then further performing drying for three hours at 55°C at reduced pressure.

Next, a fluid dispersion D6 was produced by adding anisole in such a way that the concentration of the polymeric binder B6 was 10% by mass.

The fluid dispersion D6 was added to powdery LPS ($75Li_2S$-$25P_2S_5$) as a sulfide-based solid electrolyte in such a way that the concentration of the polymeric binder B6 was 6% by mass, mixing and stirring were performed with a mortar, and solid electrolyte slurry was produced. A solid electrolyte membrane containing the polymeric binder was acquired by drying the solid electrolyte slurry and pressing the acquired powder at 300 MPa.

A solid electrolyte membrane not containing the polymeric binder was produced by a procedure similar to the above except that the polymeric binder was not used.

A tensile test was performed on each of test pieces (10 mm wide and 30 mm long) respectively cut out from two types of the acquired solid electrolyte membranes by using a digital force gauge (FGP-10 manufactured by Shimpo Corporation), and breaking strength was measured.

The breaking strength of the solid electrolyte membrane containing the polymeric binder was 1.5 MPa. On the other hand, the breaking strength of the solid electrolyte membrane not containing the polymeric binder was 0.85 MPa.

From the above, it is confirmed that the polymeric binder according to the present disclosure firmly binds the sulfide-based solid electrolyte together.

Ionic Conductance Measurement

Ionic conductance was acquired by the following method.

A 2032 type button battery type cell was produced by cutting out each of the polymeric binder membranes acquired in Examples 1 to 6 into a circle with a diameter of 16 mm and sandwiching the circle by two stainless steel sheets.

Impedance at each of 0, 10, 20, 30, 40, 50, and 60°C was measured in a measurement frequency range from 1 to 100 kHz at an amplitude voltage of 10 mV by using an impedance analyzer manufactured by Solartron. Ionic conductance was calculated from the acquired impedance by using Equation (b) below.

$$\sigma = L/(R \times S) \ldots (b)$$

In Equation (b) above, $\sigma$ denotes ionic conductance (S/cm), R denotes impedance ($\Omega$), S denotes the cross-sectional area ($cm^2$) of the polymeric binder membrane, and L denotes the thickness (cm) of the polymeric binder membrane.

Table 1 lists the measurement results. Further, by using the ionic conductance ($\sigma$) calculated from the aforementioned measurement result, an Arrhenius plot was produced with the vertical axis indicating the common logarithm [log($\sigma$)] of the ionic conductance and the horizontal axis indicating the reciprocal of the measured temperature (1000/T) (FIG. 3).

Table 1

| | Aliphatic polycarbonate | | | | | | | Polymeric binder | | | | | | |
|---|---|---|---|---|---|---|---|---|---|---|---|---|---|---|
| | Main chain | Cross-linking component | Dispersion component | | | Adhesive Component | | Added amount of LiFSI | Tg | Peel force | Thickness | Ionic conductance (σ) 30°C | Dispersion ratio in hydrophobic solvent | |
| | 1,4-butanediol:1,10-decanediol = 7:1 | Pentaerythritol | Spiro glycol | Bisphenol A | 4,4'-dihydroxy diphenylether | Triethylene glycol | Molecular weight (Mw) | | | | | | Chloroform after 0 min | Anisole after 0 min |
| | mol% | mol% | mol% | mol% | mol% | mol% | | mass% | °C | N | mm | S/cm | % | % |
| Example 1-1 | 99.5 | 0.5 | 0 | 0 | 0 | 0 | $7.2 \times 10^4$ | 0 | -39 | 0.07 | 0.058 | Unmeasurable due to high resistance | 100 | 100 |
| Example 1-2 | | | | | | | | 32 | -38 | 0.94 | 0.065 | $3.22 \times 10^{-6}$ | 74 | 0 |
| Example 2-1 | 100 | 0 | 0 | 0 | 0 | 0 | $7.1 \times 10^4$ | 0 | -44 | 0.01 | 0.053 | Unmeasurable due to high resistance | 100 | 100 |
| Example 2-2 | | | | | | | | 32 | -45 | 0.06 | 0.051 | $6.75 \times 10^{-7}$ | 70 | 0 |
| Example 3-1 | 39.5 | 0.5 | 30 | 0 | 0 | 30 | $1.7 \times 10^5$ | 0 | -34 | 0.00 | 0.166 | Unmeasurable due to high resistance | 100 | 100 |
| Example 3-2 | | | | | | | | 32 | -38 | 2.39 | 0.131 | $4.90 \times 10^{-8}$ | 81 | 87 |
| Example 3-3 | | | | | | | | 50 | -59 | 2.78 | 0.261 | $5.66 \times 10^{-6}$ | 69 | 89 |
| Example 4-1 | 69.5 | 0.5 | 0 | 30 | 0 | 0 | $4.2 \times 10^4$ | 0 | -3 | 1.08 | 0.199 | Unmeasurable due to high resistance | 100 | 100 |
| Example 4-2 | | | | | | | | 32 | -66 | 0.26 | 0.049 | $4.34 \times 10^{-8}$ | 93 | 100 |

(continued)

| | Aliphatic polycarbonate | | | | | | | Polymeric binder | | | | | | |
|---|---|---|---|---|---|---|---|---|---|---|---|---|---|---|
| | Main chain | Cross-linking component | Dispersion component | | | Adhesive Component | | Added amount of LiFSI | Tg | Peel force | Thickness | Ionic conductance (σ) 30°C | Dispersion ratio in hydrophobic solvent | |
| | 1,4-butanediol:1,10 -decanediol = 7:1 | Pentaerythritol | Spiro glycol | Bisphenol A | 4,4'-dihydroxy diphenylether | Triethylene glycol | Molecular weight (Mw) | | | | | | Chloroform after 0 min | Anisole after 0 min |
| | mol% | mol% | mol% | mol% | mol% | mol% | | mass% | °C | N | mm | S/cm | % | % |
| Example 5-1 | 69.5 | 0.5 | 0 | 0 | 30 | 0 | $4.2 \times 10^4$ | 0 | -25 | 0.09 | 0.176 | Unmeasurable due to high resistance | 100 | 100 |
| Example 5-2 | | | | | | | | 32 | -65 | 0.06 | 0.053 | $8.61 \times 10^{-8}$ | 74 | 91 |
| Example 6-1 | 49.5 | 0.5 | 30 | 0 | 0 | 20 | $4.7 \times 10^4$ | 0 | -35 | 0.00 | 0.125 | Unmeasurable due to high resistance | 100 | 97 |
| Example 6-2 | | | | | | | | 32 | -75 | 5.64 | 0.237 | $2.02 \times 10^{-8}$ | 100 | 83 |
| Example 6-3 | | | | | | | | 50 | -81 | 1.38 | 0.146 | $2.18 \times 10^{-5}$ | 90 | 80 |

It is confirmed that the polymeric binder membrane in Example 1-2 exhibits about the same or higher ionic conductance relative to the polymeric binder membrane in Example 2-2, as indicated in Table 1. From the result, it is confirmed that introduction of the cross-linked structure does not reduce ionic conductance. Further, it is confirmed that the polymeric binder membranes added with Li in Examples 1-2, 2-2, 3-3, 4-2, 5-2, and 6-3 exhibit higher ionic conductance relative to the polymeric binder membranes not added with Li in Examples 1-1, 2-1, 3-1, 4-1, 5-1, and 6-1 and that addition of Li can improve ionic conductance, as indicated in Table 1 and FIG. 3.

Hydrophobic Solvent Dispersibility of Polymeric Binder

Hydrophobic solvent dispersibility of the polymeric binders was evaluated as follows.
Each of the polymeric binder fluid dispersions produced in Examples 1 and 2 was dispensed into a 30 mL vial, underwent drying for 6 hours at 100°C, and then further underwent drying for three hours at 60°C at reduced pressure. Further, each of the polymeric binder fluid dispersions produced in Examples 3 to 5 was dispensed into a 30 mL vial, underwent drying for five hours at 60°C, and then further underwent drying for four hours at 50°C at reduced pressure.
Next, chloroform being a hydrophobic solvent was put into a 30 mL vial in such a way that the concentration of the polymeric binder was 10% by mass and underwent stirring for three hours at 25°C. After stopping of stirring, 1 g of the mixed solution was dispensed into a weighed 30 mL vial, underwent drying for one hour at 100°C, and further underwent drying for one hour at 60°C at reduced pressure.
After drying, the 30 mL vial was weighed, and the mass of the residual was calculated. The dispersion ratio of the solution was calculated from the calculated residual amount by using Equation (c) below (Table 1).

$$\text{dispersion ratio} = \text{residual amount}/\text{theoretical residual amount} \times 100 \ldots \text{(c)}$$

Chloroform was replaced by anisole as a hydrophobic solvent, and evaluation of dispersibility was similarly performed (Table 1). In this case, drying was performed for one hour at 160°C, and then drying was further performed for one hour at 60°C at reduced pressure instead of performing drying for one hour at 100°C and further performing drying for one hour at 60°C at reduced pressure.
It is found that the three-dimensional cross-linked polymeric binders in Examples 1 and 3 to 6 exhibit higher dispersibility in chloroform after adding 32% by mass lithium relative to the non-cross-linked polymeric binder in Example 2, as indicated in Table 1. It is found that the polymeric binder in Example 6 in particular exhibits dispersibility in chloroform after adding 50% by mass lithium being a high added amount.
Furthermore, it is found that the polymeric binders in Examples 3 to 6 exhibit higher dispersibility in anisole after adding 32% by mass lithium relative to the polymeric binder in Example 2. It is found that the polymeric binders in Examples 3 and 6 in particular exhibit dispersibility in anisole after adding 50% by mass lithium being a high added amount.
From the above, it is confirmed that the polymeric binders in Examples 1 and 3 to 6 have high dispersibility in a hydrophobic solvent.
While the mechanism of the polymeric binder according to the present disclosure having excellent dispersibility in a hydrophobic solvent by using the three-dimensional cross-linked copolymerized aliphatic polycarbonate is not completely clear, a mechanism as described below is conjectured.
Specifically, by the three-dimensional cross-linked structure in the copolymerized aliphatic polycarbonate containing a hydrophilic metal ion, the three-dimensional cross-linked copolymerized aliphatic polycarbonate forms a structure like a micelle the surface of which is hydrophobic. Therefore, the metal ion does not come in contact with a hydrophobic solvent, and the polymeric binder easily disperses in the hydrophobic solvent.
On the other hand, in a case of the non-cross-linked copolymerized aliphatic polycarbonate, a metallic salt may be exposed to the surface, and therefore affinity of the polymeric binder for a hydrophobic solvent declines, and dispersibility declines.
However, this mechanism is merely a conjecture, and the technical scope of the present disclosure is not limited in any way even when dispersibility of the polymeric binder according to the present disclosure in a hydrophobic solvent is improved by a mechanism other than the above.
The present disclosure allows for various embodiments and modifications without departing from the broad spirit and scope of the present disclosure. Moreover, the above-described embodiment is for explaining the present disclosure, and does not limit the scope of the present disclosure. That is, the scope of the present disclosure is indicated not by the embodiment but by the claims. And various modifications made within the scope of the claims and within the equivalent meaning of the disclosure are considered to be within the scope of the disclosure.
This application claims the benefit of Japanese Patent Application No. 2019-069157, filed on March 29, 2019, and Japanese Patent Application No. 2019-199160, filed on October 31, 2019, of which the entirety of the disclosures is incorporated by reference herein.

Industrial Applicability

The polymeric binder according to the present disclosure can bind together an active material of a cathode or an anode, or a solid electrolyte without compromising high ionic conductivity and therefore can provide an all-solid-state secondary battery and a lithium ion all-solid-state secondary battery that have a high electromotive force and high discharge capacity. Accordingly, the present disclosure can be used as a battery not only for small-sized equipment such as a mobile phone, a smartphone, and a camera but also for large-sized equipment such as an electric vehicle and is of outstanding utility value from an industrial viewpoint.

## Claims

1. A polymeric binder comprising copolymerized aliphatic polycarbonate having structural units expressed by Formula (1) and Formula (2) below

[Chem. 1]

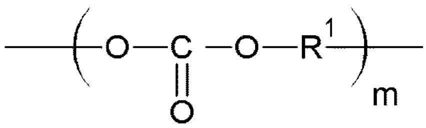

(1)

[Chem. 2]

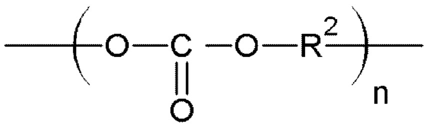

(2)

where $R^1$ and $R^2$ independently denote alkylene groups having 2 to 20 carbon atoms and being nonidentical to each other, and m and n independently denote integers equal to or greater than 3 and equal to or less than 60.

2. The polymeric binder according to claim 1, wherein the $R^1$ is an alkylene group having 2 to 7 carbon atoms and the $R^2$ is an alkylene group having 8 to 12 carbon atoms.

3. The polymeric binder according to claim 1 or 2, wherein a molar ratio (m:n) of a structural unit expressed by the Formula (1) to a structural unit expressed by the Formula (2) is (6:4) to (9.9:0.1).

4. The polymeric binder according to any one of claims 1 to 3, wherein the copolymerized aliphatic polycarbonate is non-cross-linked copolymerized aliphatic polycarbonate.

5. The polymeric binder according to any one of claims 1 to 3, wherein the copolymerized aliphatic polycarbonate is three-dimensional cross-linked copolymerized aliphatic polycarbonate.

6. The polymeric binder according to claim 5, wherein the three-dimensional cross-linked copolymerized aliphatic polycarbonate contains a component derived from polyol having three or more hydroxyl groups.

7. The polymeric binder according to claim 6, wherein the polyol is glycerin, trimethylolpropane, or pentaerythritol.

8. The polymeric binder according to claim 6 or 7, wherein a ratio of a total of the Formula (1) and the Formula (2) to a component derived from polyol having three or more hydroxyl groups in the three-dimensional cross-linked copolymerized aliphatic polycarbonate is (99.99:0.01) to (90:10) in terms of a molar ratio.

9. The polymeric binder according to any one of claims 1 to 8, wherein the copolymerized aliphatic polycarbonate further has a structural unit expressed by Formula (3) below

[Chem. 3]

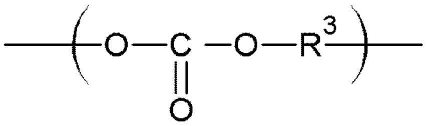 (3)

where $R^3$ denotes a hydrocarbon residue having a spiro-structure or a diphenylmethane structure, and the structure may contain a heteroatom.

**10.** The polymeric binder according to claim 9, wherein the copolymerized aliphatic polycarbonate further has a structural unit expressed by Formula (4) below

[Chem. 4]

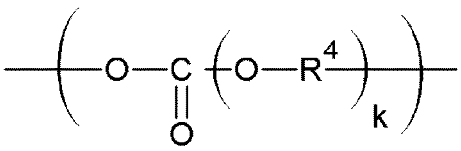 (4)

where $R^4$ denotes an aliphatic hydrocarbon residue having 2 to 10 carbon atoms, and k denotes an integer equal to or greater than 1 and equal to or less than 30.

**11.** An all-solid-state secondary battery comprising the polymeric binder according to any one of claims 1 to 10.

FIG. 1

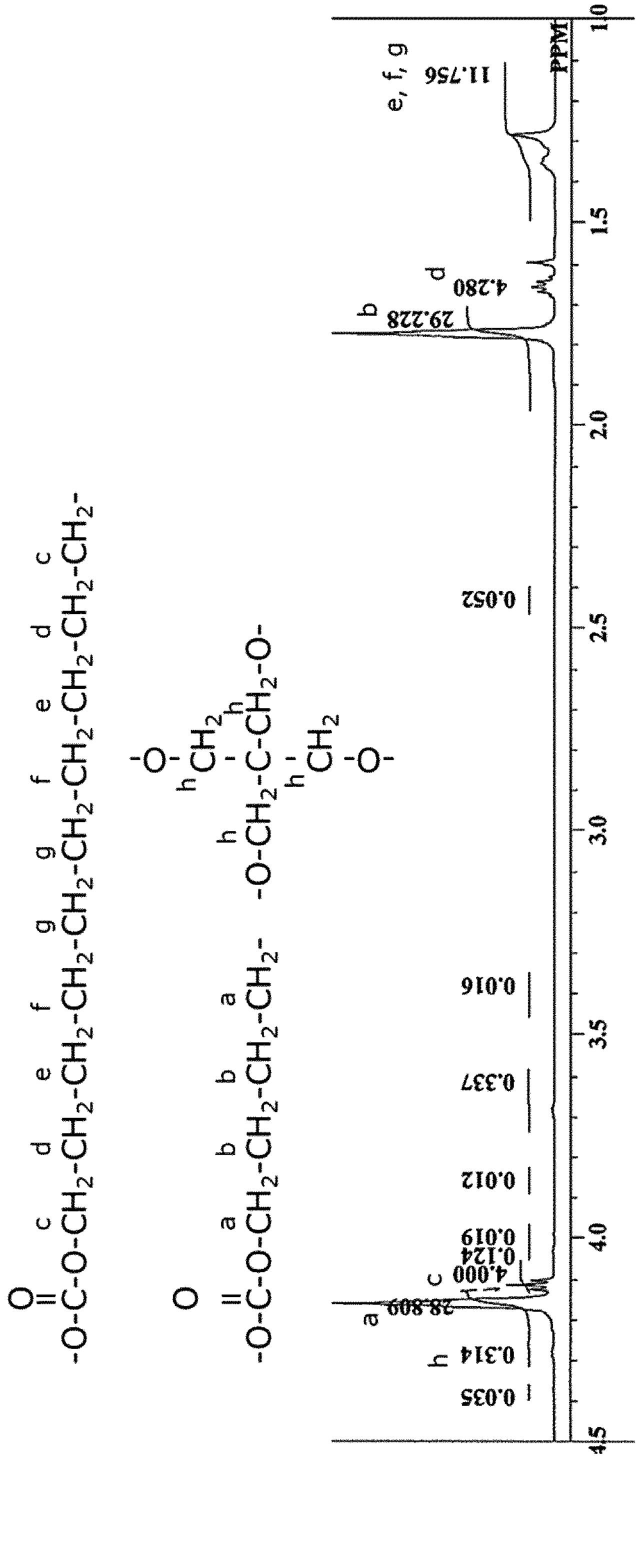

FIG. 2

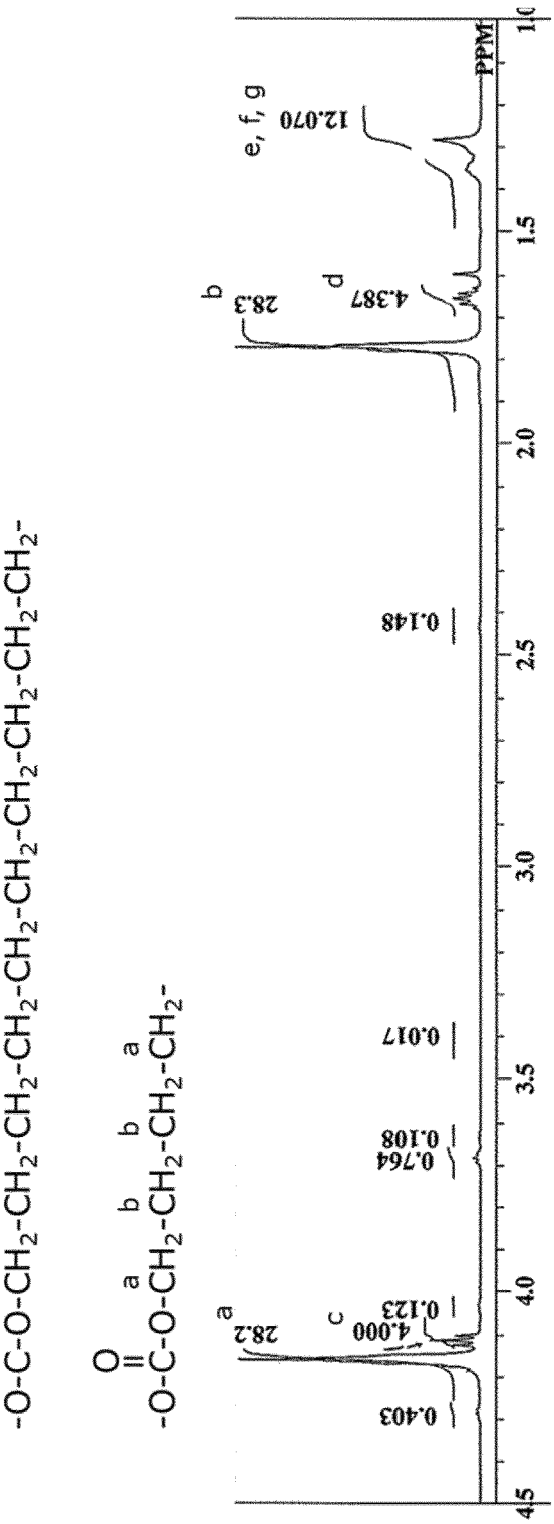
PPM
1.0
1.5
2.0
2.5
3.0
3.5
4.0
4.5
12.070
28.3
4.387
0.148
0.017
0.108
0.764
0.123
4.000
28.2
0.403

FIG. 3

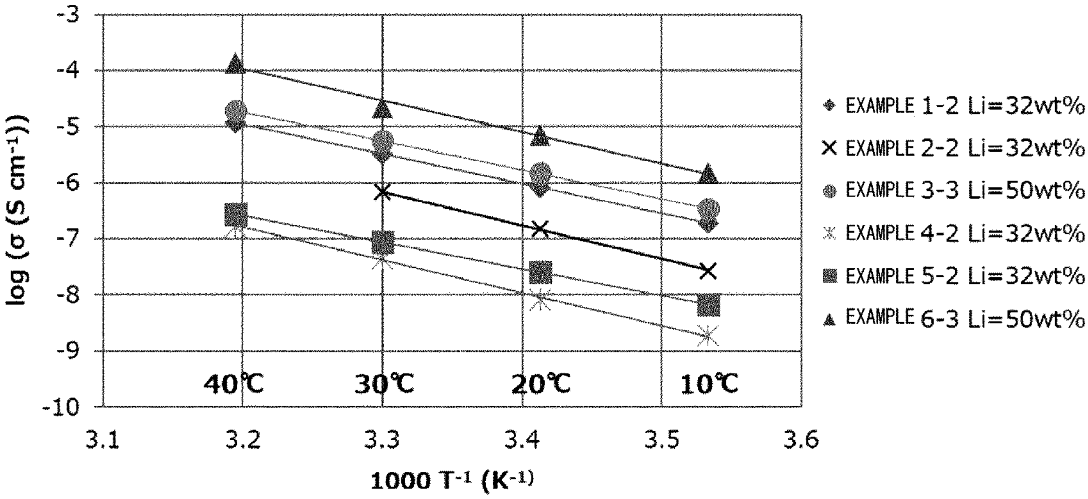
-3
-4
-5
-6
-7
-8
-9
-10
log (σ (S cm-1))
40℃
30℃
20℃
10℃
3.1
3.2
3.3
3.4
3.5
3.6
1000 T-1 (K-1)
EXAMPLE 1-2 Li=32wt%
EXAMPLE 2-2 Li=32wt%
EXAMPLE 3-3 Li=50wt%
EXAMPLE 4-2 Li=32wt%
EXAMPLE 5-2 Li=32wt%
EXAMPLE 6-3 Li=50wt%

FIG. 4

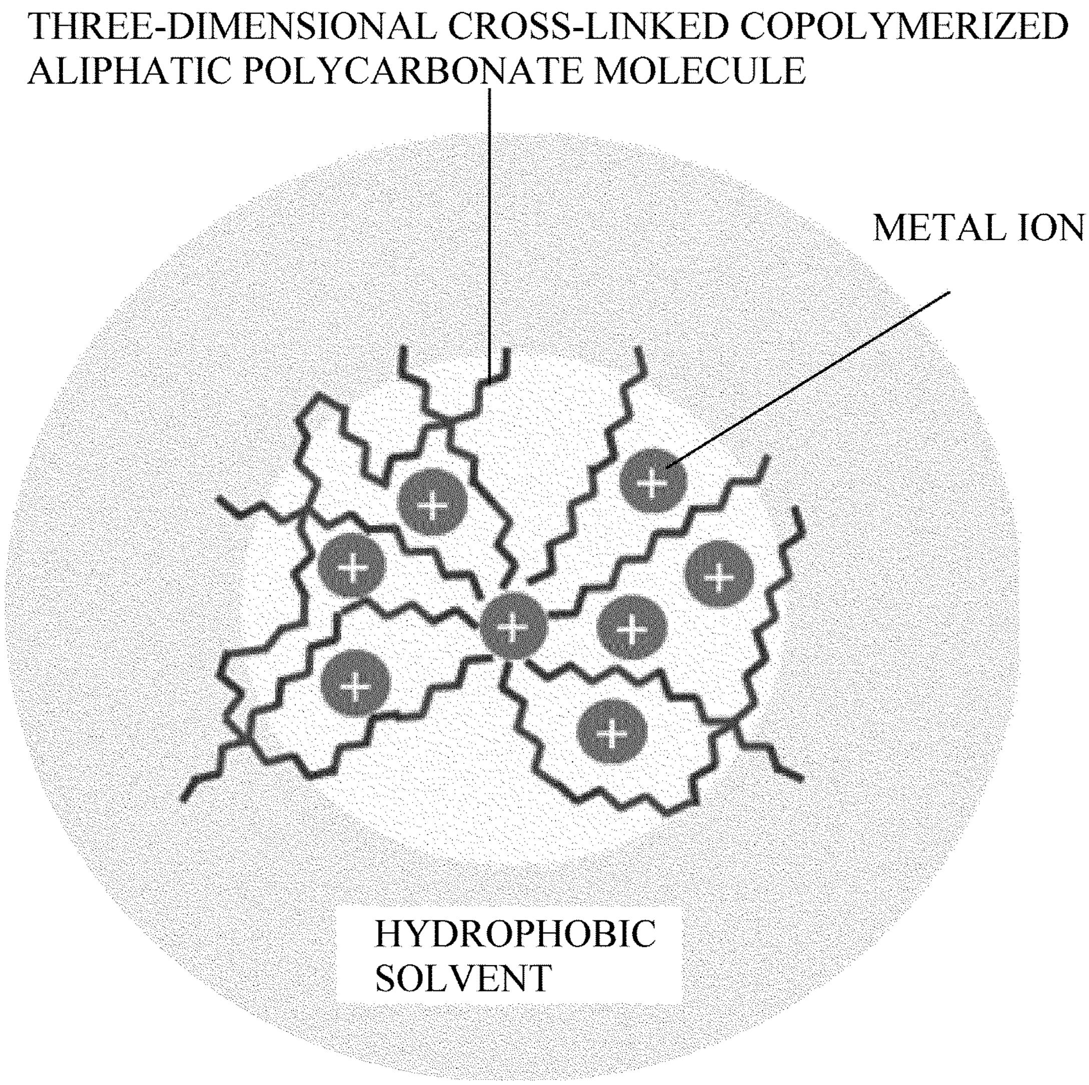
THREE-DIMENSIONAL CROSS-LINKED COPOLYMERIZED ALIPHATIC POLYCARBONATE MOLECULE
METAL ION
HYDROPHOBIC SOLVENT

FIG. 5

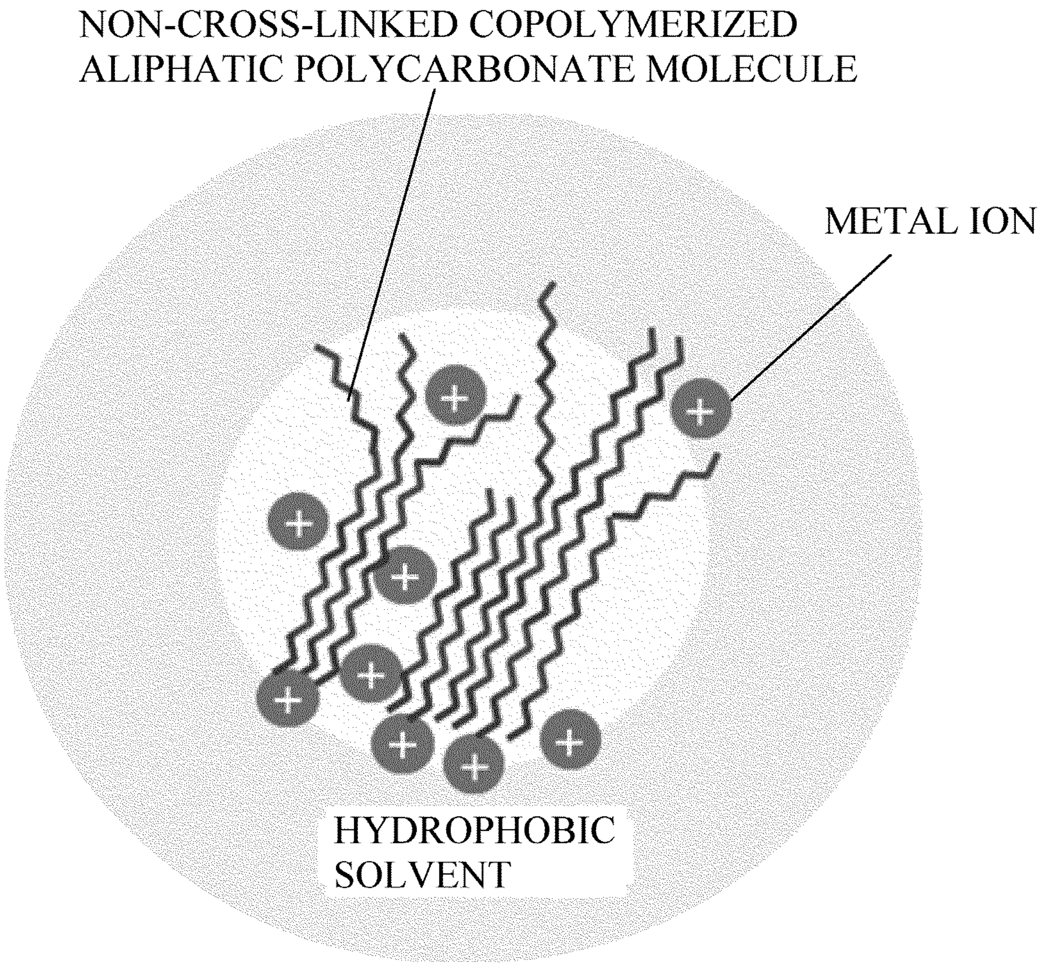
NON-CROSS-LINKED COPOLYMERIZED
ALIPHATIC POLYCARBONATE MOLECULE
METAL ION
HYDROPHOBIC
SOLVENT

**INTERNATIONAL SEARCH REPORT**

International application No. PCT/JP2020/014309

A. CLASSIFICATION OF SUBJECT MATTER
Int. Cl. C08G64/02(2006.01)i, C08G64/42(2006.01)i, C08L69/00(2006.01)i, H01M4/62(2006.01)i, H01M10/0562(2010.01)i

According to International Patent Classification (IPC) or to both national classification and IPC

B. FIELDS SEARCHED
Minimum documentation searched (classification system followed by classification symbols)
Int. Cl. C08G64/02, C08G64/42, C08L69/00, H01M4/62, H01M10/0562

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | JP 2002-275234 A (NIPPON POLYURETHANE INDUSTRY CO., LTD.) 25 September 2002, claims, paragraphs [0030]-[0032], [0089] | 1-8, 11 |
| X | JP 2004-315591 A (NITTO DENKO CORP.) 11 November 2004, claims, paragraphs [0040], [0044], [0054] | 1-8 |
| X | JP 8-217868 A (SONY CORP.) 27 August 1996, claims, paragraphs [0027], [0028] | 1-4, 11 |
| A | JP 2015-67622 A (MITSUBISHI CHEMICAL CORP.) 13 April 2015 | 1-11 |
| A | JP 2-289616 A (ASAHI CHEMICAL INDUSTRY CO., LTD.) 29 November 1990 | 1-11 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02.06.2020 | 09.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/014309

C (Continuation). DOCUMENTS CONSIDERED TO BE RELEVANT

| Category* | Citation of document, with indication, where appropriate, of the relevant passages | Relevant to claim No. |
|---|---|---|
| A | WO 2016/125716 A1 (FUJIFILM CORP.) 11 August 2016 | 1-11 |

Form PCT/ISA/210 (continuation of second sheet) (January 2015)

**INTERNATIONAL SEARCH REPORT**
Information on patent family members

International application No.
PCT/JP2020/014309

| Patent Documents referred to in the Report | Publication Date | Patent Family | Publication Date |
|---|---|---|---|
| JP 2002-275234 A | 25.09.2002 | (Family: none) | |
| JP 2004-315591 A | 11.11.2004 | (Family: none) | |
| JP 8-217868 A | 27.08.1996 | (Family: none) | |
| JP 2015-67622 A | 13.04.2015 | (Family: none) | |
| JP 2-289616 A | 29.11.1990 | US 4855377 A<br>US 5070173 A<br>EP 302712 A2 | |
| WO 2016/125716 A1 | 11.08.2016 | US 2017/0288144 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014137869 A
- JP 2014212022 A
- JP 2019069157 A
- JP 2019199160 A